# EUROPEAN PATENT SPECIFICATION

(11) **EP 1 621 310 B1**
(45) Date of publication and mention of the grant of the patent: **07.08.2013**
(21) Application number: 04724514.7
(22) Date of filing: 31.03.2004
(51) Int. Cl.: B29B 9/06, B29B 9/00

(54) **A METHOD OF PRODUCING ETHYLENE-VINYL ALCOHOL COPOLYMER PELLET**
VERFAHREN ZUR HERSTELLUNG EINES ETHYLEN-VINYL-ALKOHOL-COPOLYMER-PELLETS
PROCEDE PERMETTANT DE PRODUIRE UNE PASTILLE DE COPOLYMERE A BASE D'ETHYLENE/ALCOOL VINYLIQUE

(43) Date of publication of application: 01.02.2006
(73) Proprietor: Chang Chun Petrochemical Co. Ltd., Tapei, Taiwan (TW)
(72) Inventor: LIN, Li-shing, Miaoli, Taiwan (CN); TSAI, Jing-jin, Miaoli, Taiwan (CN); CHANG, Huanming, Miaoli, Taiwan (CN); FAN, Kuang-hui, Miaoli, Taiwan (CN); LIN, Weng-shing, Miaoli, Taiwan (CN); LIN, Sheng-hung, Miaoli, Taiwan (CN)
(74) Representative: Isarpatent
(86) International application number: PCT/CN2004/000291
(87) International publication number: WO 2005/095077

(56) References cited:
- CN-A- 1 287 051
- US-B1- 6 238 606
- US-B1- 6 238 606
- US-B1- 6 610 233
- US-B1- 6 686 405

## Description

### Field of the invention

The present invention relates to a method for preparing ethylene-vinyl alcohol copolymer pellets, particularly to a method for continuously preparing ethylene-vinyl alcohol copolymer pellets having uniform shape and size.

The present invention also relates to a method for preparing ethylene-vinyl alcohol copolymer pellets in which an additive such as acetic acid and/or a phosphate salt are(is) added into a flowing coagulating fluid for cold precipitating the pellets to improve the heat-resistance of the ethylene-vinyl alcohol copolymer.

### Background of the invention

Ethylene-vinyl alcohol copolymer (EVOH) possesses excellent oxygen barrier property, chemical-resistance, transparency, and excellent processing property. Due to the above excellent properties, EVOH has been widely processed into films, sheets, and fiber, and has been used as packaging material in food or pharmaceutical field, and used as a starting material for producing container such as bottles, vehicle's oil tank.

Conventionally, EVOH copolymer is prepared by free radical solution copolymerization by using vinyl acetate and ethylene as starting materials. The copolymerization usually uses methanol as polymerization solvent and is conducted at a temperature of from 55 to 75°C. Meanwhile, to attain both of processing property and gas barrier property, the reaction pressure is controlled at between 25 to 60 kg/cm²G to maintain ethylene in a suitable amount in the reaction system. After copolymerization, ethylene-vinyl acetate copolymer (EVOAc) is obtained. Subsequently, un-reacted ethylene is removed from the resultant methanol solution containing EVOAc under releasing pressure, and un-reacted vinyl acetate is distilled off by passing the methanol solution through a scrubber column. Finally, the EVOAc contained in methanol is subjected to a saponification to produce EVOH. For example, USP 3847645 disclosed a method for saponifying, separating, and purifying ethylene-vinyl acetate copolymer, which comprises saponifying the ethylene-vinyl acetate copolymer with alkali catalyst in an aqueous methanol, extruding the aqueous methanol through a slit or spinet into a coagulating bath consisting of diluted methanol solution or water to form a micro-porous sheets or strands. Thereafter, the resultant sheets or strands are washed with water to remove the excess alkali catalyst and the acetate salt generated during saponification and then dried.

For example, USP 6,238,606 disclosed a method for preparing a saponified ethylene-vinyl acetate copolymer (also refer to ethylene-vinyl alcohol copolymer, EVOH) pellets, which comprises extruding the saponified ethylene-vinyl acetate copolymer solution into strands, placing the strands into coagulation liquid and then cutting the resulting strands into pellets, wherein the ratio between X of the coagulation liquid and the weight Y of the strand of the saponified ethylene-vinyl acetate copolymer, namely the ratio X/Y, is set at from 50 to 10,000. Since the method mentioned in the '606 patent uses coagulation liquid to precipitate the EVOH solution, it should control the precipitating amount of the EVOH solution or the composition of the coagulation liquid. If the precipitating amount of the EVOH solution increases or the composition of the coagulation liquid changes, the precipitated strands easily break down. Alternatively, if the EVOH solution contains a large amount of water, it also results in easily breakdown of the resultant strands or results in un-uniform pellets in size. Thus the quality of the pellets is not easily controlled.

Furthermore, to improve the heat-resistance of the EVOH when processing into products, a method in which treating agents such as acetic acid, fonnic acid, tartaric acid are added into EVOH has been proposed, for example, in Japanese Examined Patent Publication Sho 46-37664. Also, Japanese Examined Patent Publication Sho 55-19242 disclosed a method for improving the processing heat-resistance of EVOH by incorporating a mixture of acetic acid and phosphoric acid into EVOH. Moreover, Japanese Examined Patent Publication Sho 57-5834 disclosed a method for improving the processing heat-resistance of EVOH by incorporating a mixture of organic acid and its sodium or potassium salt into EVOH solution.

In view of the fact that the conventional methods easily result in breakdown of precipitated EVOH strands and formation of un-uniform EVOH pellets in size and thus unstable handling in subsequent process, the present inventors have conducted an investigation in process for preparing ethylene-vinyl alcohol copolymer pellet and thus completed the present invention.

### Summary of the invention

The present invention provides a method for manufacturing ethylene-vinyl alcohol copolymer pellets according to claim 1.

The present invention also provides a method for manufacturing ethylene-vinyl alcohol copolymer pellets as mentioned above, wherein the coagulating fluid for cooling the ethylene-vinyl alcohol copolymer pellets is further added with additives such as acetic acid and/or a phosphate salt to simultaneously improve the heat-resistance of the ethylene-vinyl alcohol copolymer.

According to the method of the present invention, it can stably and continuously produce EVOH pellets having uniform size and shape and an improved heat resistance.

### Brief Description of Drawing

Figure 1 is a schematic view showing the system for carrying out the method of the present invention;
Figure 2 is a photo of a copolymer pellet produced by one embodiment of the method of the present invention;
Figure 3 is a photo of a copolymer pellet produced by another embodiment of the method of the present invention;
Figure 4 is a photo of a copolymer pellet produced by further another embodiment of the method of the present invention; and
Figure 5 is a photo of a copolymer pellet produced by also another embodiment of the method of the present invention.

### Detailed Description of the Invention

The present invention provides a method for manufacturing ethylene-vinyl alcohol copolymer pellets according to claim 1.

The present invention also provides a method for manufacturing ethylene-vinyl alcohol copolymer pellets as mentioned above, wherein the coagulating fluid for cooling the ethylene-vinyl alcohol copolymer pellets is further added with additives such as acetic acid and/or a phosphate salt to simultaneously improve the heat-resistance of the ethylene-vinyl alcohol copolymer.

An ethylene-vinyl alcohol copolymer pellet, which is produced by the method of the present invention is characterized that the pellet has a curved surface of which trace consisting of connective points on its surface is in an arc.

The term "a trace consisting of connective points on its surface is in an arc" means that there not exists any distinguishable boundary on the surface of the pellet. For example, it means sphere, long-circular, ellipsoid, and teardrop shapes.

In the method of the present invention, the ethylene-vinyl alcohol copolymer solution is directly cut into pellets by a cutter and simultaneously a flowing coagulating fluid carries the resultant pellets away and cools the pellets to precipitate out. Since the cutting is carrying out in the flowing coagulating fluid, i.e. immersed the fluid, the cutting manner is hereinafter also referred to "granulating method immersed in a flowing fluid".

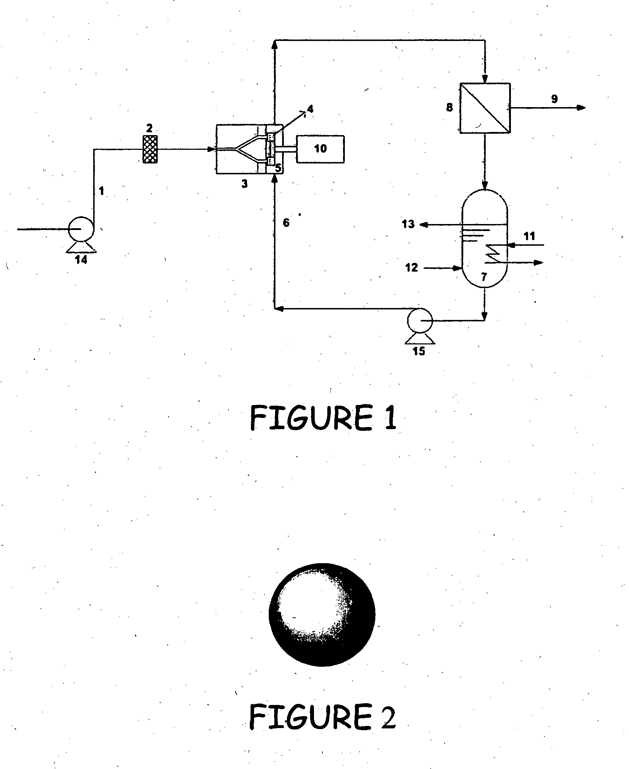

To illustrate the granulating method under flowing fluid of the present invention in detail, the following non-limited examples are described by reference to the accompanying drawings. Figure 1 is a schematic view showing the system for carrying out the method of the present invention, in which numeral **1** represents an EVOH solution inlet line, **2** represents a filter device, **3** represents a die plate of an extruder, **4** represents a cutter, **5** represents a cutting chamber, **6** represents a line for circulating coagulating fluid, 7 represents a coagulating fluid, **8** represents a solid-liquid separating device, **9** represents an output hopper of the EVOH copolymer pellets, **10** represents an apparatus for spinning and driving the cutter, **11** represents a heat exchanger, **12** represents an input port for supplementing coagulating fluid, **13** represents a overflowing port of coagulating fluid, and **14** and **15** both represent fluid delivering devices.

Please refer to Figure 1, the EVOH copolymer solution is feed into the filter device **2** by using the fluid delivering device via the inlet line **1** and then entered into the die plate **3** of the extruder. The die plate **3** can control the temperature of the EVOH copolymer solution in the die plate by external heating device. After passing through the die plate **3,** the EVOH copolymer solution is then entered into the cutting chamber **5** and cut into EVOH copolymer pellets by the cutter **4.** The resultant pellets is immediately carried out of the cutting chamber **5** by the flowing coagulating fluid via the line **6** for circulating coagulating fluid and simultaneously coagulated. The coagulated pellets are then fed into a solid-liquid separating device **8** at where the coagulated pellets are separated from the flowing coagulating fluid and collected in the output hopper **9.** The flowing coagulating fluid is then passed through the heat exchanger **11** to remove heat and recycled to cutting chamber **5** for re-use.

The amount of the flowing coagulating fluid in the heat exchanger **11** can be controlled by the input port **12** for supplementing coagulating fluid and the overflowing port **13** of coagulating fluid. The amount of the flowing coagulating fluid in the heat exchanger **11** can be controlled at an appropriate level by supplementing coagulating fluid through the input port 12 when the flowing coagulating fluid in the heat exchanger **11** is insufficient and by discharging excess fluid through the overflowing port **13** when the flowing coagulating fluid in the heat exchanger **11** is excess.

According to the present method for preparing EVOH pellets, the temperature of the die plate **3** is controlled in a range of from 55°C to 100°C by external heating device, preferably from 60°C to 90°C more preferably from 60°C to 85°C. The temperature of the die plate **3** greatly affects the shape and size of the resultant EVOH pellets. If the temperature of the die plate is less than 55°C the phase separation of the EVOH solution is easily occurred to result in blockade of the die plate. If the temperature of the die plate is higher than 100°C, the coagulation of the EVOH pellets is not easily performed thus decrease the coagulating effect and increase production cost. Moreover, the die plate used in the present invention is not limited, as long as the EVOH solution can be passed smoothly through the die plate, although it is usually composed of numbers of nozzles having a specific pore size. The pore size varies depending on the desired size of the EVOH pellets, which is well known by those skilled in the art without specific limitation. However, the number of the nozzles of the die plate is in a range of from 4 to several hundreds.

The fluid delivering devices 14 and 15 used in the present method include, for example, a centrifugal pump, a gear pump, or an extruder.

Moreover, in the present method, the shape and size of the resultant pellets are affected by various factors such as rotating speed of a cutter, temperature of the coagulation fluid and flow rate thereof. The faster the rotating speed of cutter is, the smaller the size of resultant pellets is. On the contrary, the slower the rotating speed of cutter is, the larger the size of resultant pellets is. Although the rotating speed of the cutter is not critical, it is usually in a range of from 550 rpm to 6000 rpm, preferably 850 rpm to 4500 rpm, more preferably from 1000 rpm to 3000 rpm. Provided that if the rotating speed is less than 850 rpm, the distance between nozzles of the die plate should be equal to or more than 240 mm.

In the present method, when the temperature of the coagulating fluid is lower, the effect for coagulating the EVOH pellets is better. However, the temperature of the coagulating fluid is usually in a range of from -20°C to 50°C, preferably in a range of from 0°C to 35°C. According to the present method, the coagulating fluid can use, for example, liquid nitrogen, water, lower (C₁₋₆) alkanol, or a mixture thereof.

In the present method, the flow rate of the coagulating fluid is relative to the feeding amount of the EVOH solution. The more the feeding amount of the EVOH solution is, the faster the flow rate of the coagulating fluid required to effective coagulate the EVOH pellets is. According to the present method, when the flow rate of the coagulating fluid is represented as **A** and the feeding amount of the EVOH solution is represented by **B,** and the ratio of the flow rate of the coagulating fluid to the feeding amount of the EVOH solution is represented by **R**, then **R**(i.e. **A/B**) value is in a range of from 0.5 to 100, preferably in a range of from 1.0 to 80.

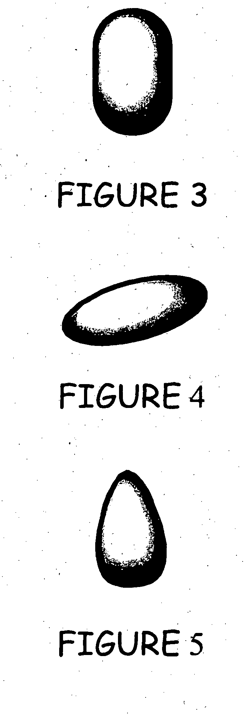

According to the present method, the breakdown of precipitated EVOH strands and formation of un-uniform EVOH pellets in size found in conventional method for preparing EVOH copolymer pellet could be eliminated. The method of the present invention can be stably operated and can produce pellets having uniform shape and size by adjusting the above parameters in the pellet producing system. According to the method of the present invention, after passing through the solid-liquid separating device, the obtained EVOH pellets have a curved surface of which trace consisting of connective points on its surface is in an arc and do not exist any distinguishable boundary on the surface of the pellet. The shape of the pellets produced by the present method is usually a sphere shape (as shown in Figure 2), a long-circular shape (as shown in Figure 3), an ellipsoid shape (as shown in Figure 4), and a water-drop shape (as shown in Figure 5), more usually a sphere shape and a long-circular shape. If a shape factor **S** represents the geometric shape of a pellet, then the factor **S** can be calculated by a formula **S**= **L/D,** in which **L** represents the long axis in the projected area of the pellet after drying, and **D** represents the short axis in the projected area of the pellet after drying. In the present method, the **D** value is usually in a range of from 0.5 mm to 10 mm, preferably from 1 mm to 8 mm, more preferably 1.5 mm to 6 mm. The shape factor S of the EVOH pellet produced by the present method is equal to or more than 1, preferably in a range of from 1 to 10, more preferably from 1 to 6, and most preferably from 1 to 4. When S=1, it means that the pellet is in a form of sphere shape, as shown in Figure 2. When S>1, it means that the pellet is not in a form of sphere shape. The more the S value is, the much tendency the long circular shape formed is. When S>1, the shape of the pellets can be a long-circular shape, an ellipsoid shape, and a water-drop shape, as shown in Figures 3, 4, and 5, respectively.

According to the present method, it further comprises a step of adding additives such as acetic acid and/or a phosphate salt into the coagulating fluid to further improve the heat resistance of the resultant EVOH pellet.

The EVOH copolymer solution used in the present method is prepared from free radical solution copolymerization by using ethylene and vinyl acetate as starting materials. Such a free radical solution copolymerization is usually carried out by using methanol as copolymerization solvent at a temperature of from 55°C to 75°C under a reaction pressure of from 25 to 60 kg/cm²G and under appropriate controlling the ethylene content to obtain ethylene-vinyl acetate copolymer. Then the resultant ethylene-vinyl acetate copolymer is subjected to a saponification in the presence of a base to obtain ethylene-vinyl alcohol copolymer.

The EVOH used for granulation in the method of the present invention is not critical and can be any EVOH solution generally produced in this field. The EVOH solution usually contains ethylene in an amount of from 10 to 60 mole %, preferably from 25 to 50 mole%. Besides, the saponification degree of converting ethylene-vinyl acetate into ethylene-vinyl alcohol is generally not less than 80 mole%, preferably not less than 95 mole %. The ethylene content in the EVOH or the saponification degree outside the above range would decrease properties of the EVOH copolymer, such as gas-barrier property, water resistance, and processing property.

The EVOH used for granulation in the method of the present invention is present in a concentration of from 30 to 60% by weight, preferably from 35 to 50% by weight, more preferably from 38 to 45% by weight. If the concentration of EVOH in the EVOH solution is less than 30% by weight, it is difficult to be granulated, can not operate stably, and would not be effectively coagulated by the coagulating fluid. If the concentration of EVOH in the EVOH solution is more than 60% by weight, it would increase the viscosity of the EVOH solution and increase the delivery difficulty. It also results in a phase separation of the resultant EVOH and decrease the operation stability.

The solvent contained in the EVOH solution includes, for example, dimethyl sulfoxide (DMSO), N,N-dimethylforamide (DMF), methanol, ethanol, propanol, isopropanol, cresol, resorcinol, or a mixture thereof with water, etc. When a mixture is used, it preferably uses a mixture of alcohols and water in a weight ratio (alcohol/water) of from 99/1 to 60/40, more preferably from 90/10 to 70/30.

In the present method, after granulation, the resultant pellets are generally subjected to water washing treatment to remove impurities contained in the EVOH pellets and then dried to evaporate moisture from EVOH pellets and maintain water content of the EVOH pellets at a certain level. As there is a white film on the part of or on the whole surface of the pellets after drying, it imparts a poor appearance to the EVOH pellets. Therefore, in the present method, after the water washing treatment and before the drying, a pre-treatment is carried out so that the appearance of the EVOH pellets is greatly improved. The pre-treatment is carried out at a temperature of from 30 to 130°C, preferably from 40 to 110°C, and more preferably from 45 to 105°C under a relative humidity of from 5% to 100%, preferably from 30% to 95%, and more preferably from 45% to 90% at an atmosphere of argon, nitrogen, air, and a mixture thereof, preferably at an atmosphere of nitrogen or air.

The present invention is illustrated by reference to the following Examples and Reference examples. However, the Examples are only used for illustrating the present invention without limiting the scope of the present invention.

### Example 1

An ethylene-vinyl acetate (EVOAc) copolymer containing ethylene in an amount of 32 mole% was subjected to a saponification treatment to obtain ethylene-vinyl alcohol (EVOH) copolymer having a saponification degree of more than 99.5 mole%. Then, the EVOH copolymer was dissolved in a mixture of methanol and water in a weight ratio of methanol to water of 70:30 to obtain a 39% by weight of EVOH solution. The resultant EVOH solution was stored in a tank and maintain at a temperature of 60°C before using in the subsequent procedure.

The above resultant EVOH solution was feed into feeding line via a gear pump at a rate of 100 liter/minute to allow the EVOH passing through a die plate having eight orifices each having a diameter of 2.8 mm while maintaining the temperature of the die plate at 70°C. When the EVOH solution passed through the die plate, it was immediately cut by a cutter at a spin speed of 1500 rpm to form pellets of the EVOH solution, meanwhile the pellets were immediately cooled by circulating coagulating fluid at a temperature of 6°C at a flow rate of 120 liters/min. The coagulating fluid carried the cooled pellets into a solid-liquid separator to separate the pellets from the fluid. The resultant pellets were washed with water for 30 minutes and subjected to a pre-treatment in an oven at a temperature 85°C and relative humidity of 95% for 40 minutes. Then the pre-treated pellets were placed in an oven at a temperature of 120°C for 24 hours to remove the residual moisture to obtain dried EVOH pellets.

The long diameter (L) and short diameter (D) of the dried EVOH pellets were measured by a caliper by randomly selecting 20 pellets and averaged and its shape factor S was then calculated from the average diameter values. The surface of the dried pellets was then visual observed to determine whether part or whole surface was covered with a white film.

### Example 2

The procedures in Example 1 were followed except that the EVOH content in the EVOH solution was changed to 44% by weight. The determination and calculation of the shape factor S were similar to Example 1.

### Example 3

The procedures in Example were followed except that the feeding rate of the EVOH solution was changed to 4 liters/min and the flow rate of circulating coagulating fluid was changed to 310 liters/min and the pellets were not subjected to pre-treatment but were directly dried in an oven at 120°C for 24 hours. The determination and calculation of the shape factor S were similar to Example 1.

### Example 4

The procedures in Example 1 were followed except that the feeding rate of the EVOH solution was changed to 80 liters/min, the flow rate and the temperature of circulating coagulating fluid was changed to 310 liters/min and 9■, respectively, the spin speed of the cutter was set at 3000 rpm, and the temperature of the die plate was set at 81°C. The determination and calculation of the shape factor S were similar to Example 1.

### Example 5

The procedures in Example 1 were followed except that the spin speed of the cutter was set at 2200 rpm, the temperature of the die plate was set at 80°C, and the pre-treatment was carried out at a temperature of 70°C and relative humidity of 47%. The determination and calculation of the shape factor S were similar to Example 1.

### Comparative Example 1

The procedures in Example 1 were followed except that the feeding rate of the EVOH solution was changed to 83 liters/min, the flow rate and the temperature of circulating coagulating fluid was changed to 150 liters/min and 5°C, respectively, and the spin speed of the cutter was set at 800 rpm. The determination and calculation of the shape factor S were similar to Example 1.

In the Comparative Example 1, although the temperature of the coagulating fluid falls in the range specified in the present invention, however, since the spin speed of a cutter falls outside of the range specified in the present invention, it is difficultly subjected to the granulation and thus its shape factor S is not measurable.

### Comparative Example 2

The procedures in Example 1 were followed except that the feeding rate of the EVOH solution was changed to 70 liters/min, the flow rate and the temperature of circulating coagulating fluid was changed to 180 liters/min and 5°C, respectively, and the temperature of the die plate was set at 50°C. The determination and calculation of the shape factor S were similar to Example 1.

In the Comparative Example 2, although the temperature of the coagulating fluid falls in the range specified in the present invention, however, since the temperature of the die plate falls outside of the range specified in the present invention, it is difficultly subjected to the granulation and thus its shape factor S is not measurable.

The measured shape factor S for the pellets produced in Examples and the results for observing the pellet surface were shown in Table 1.

**Table 1**

| | shape factor S | White film on the EVOH pellet surface | Note |
|---|---|---|---|
| Example 1 | 1.54 | No | |
| Example 2 | 1.62 | No | |
| Example 3 | 1.35 | Yes | |
| Example 4 | 1.45 | No | |
| Example 5 | 1.49 | No | |
| Comparative Example 1 | N.A. | N.A. | Note 1 |
| Comparative Example 2 | N.A. | N.A. | Note 2 |

| | | | |
|---|---|---|---|
| Note 1: N.A.= Not available, this is because that the EVOH solution passed through the die plate and cut by cutter but formed agglomerated cluster other than individual pellets. Note 2: N.A.= Not available, this is because that the EVOH solution passed through the die plate but a phase separation occurred thus blocked the orifices of the die plate and can not be granulated. | | | |

From Table 1, it knows that the granulation conditions fall outside the range specified in the present invention and thus can not produce pellets. Although Example 3 did not include the pre-treatment procedure and there is white film on the pellet surface, but it would not adverse influence the required properties of EVOH pellets in this field and its granulation is good.

### Example 6

The procedures in Example 1 were followed except that the number of orifices on the die plate was 4 (i.e. a distance between them is 254mm), the temperature of the coagulating fluid was set at 3-4°C, and the spin speed of the cutter was 580 rpm. The granulation was smoothly carried out and the resultant pellets are uniform in size.

### Example 7

An ethylene-vinyl acetate (EVOAc) copolymer containing ethylene at an amount of 32 mole% was subjected to a saponification treatment to obtain ethylene-vinyl alcohol (EVOH) copolymer having a saponification degree of more than 99.5 mole%. Then, the EVOH copolymer was dissolved in a mixture of methanol and water in a weight ratio of methanol to water of 70:30 to obtain a 39% by weight of EVOH solution. The resultant EVOH solution was stored in a tank and maintain at a temperature of 60°C for using in the subsequent procedure.

The above resultant EVOH solution was feed into feeding line via a gear pump at a rate of 100 liter/minute to allow the EVOH passing a die plate having eight orifices of a diameter of 2.8 mm while maintaining the temperature of the die plate at 70°C. When the EVOH solution passed the die plate, it was immediately cut by a cutter at a spin speed of 1500 rpm to form pellets of the EVOH solution, meanwhile the pellets were immediately cooled by circulating coagulating fluid at a temperature of 6°C at a flow rate of 120 liters/min. The coagulating fluid contains, as additives, 0.2% by weight of acetic acid, 0.1 % by weight of magnesium dihydrophosphate, and 0.05% by weight of potassium dihydrophosphate. The coagulating fluid carried the cooled pellets into a solid-liquid separator to separate the pellets from the fluid. The resultant pellets were washed with water for 30 minutes and subjected to a pre-treatment in an oven containing air at a temperature 85°C and relative humidity of 95% for 40 minutes. Then the pre-treated pellets were placed in an oven at a temperature of 120°C for 24 hours to remove the residual moisture to obtain dried EVOH pellets.

Ten grams of the obtained EVOH pellets were weighted into an aluminum plate having length 6 cm * width 6 cm * high 0.5 cm. Then the aluminum plate was placed in a furnace at a temperature of 200°C for 30 minutes to proceed with heat resistant test. After removing from the furnace and cooling down, the EVOH pellets were determined its yellowing level by using a yellow meter (Model SP68 Srctrophtometer produced by X-Rite Photo marketing) according to the method of ASTM D1925. The yellowing level is in term of Yellow Index (YI) value. The more the YI value is, the less the heat resistance is. Conversely, the less the YI value is, the more the heat resistance is.

### Examples 8-10

Except the additives acetic acid, magnesium dihydrophosphate, and potassium dihydrophosphate were used in the amount listed in Table 2, the production of EVOH pellets and the heat resistance test were similar to those in Example 7.

### Reference Example 1-7

Except the additives acetic acid, magnesium dihydrophosphate, and potassium dihydrophosphate were used in the amount listed in Table 2, the production of EVOH pellets and the heat resistance test were similar to those in Example 7.

The heat resistance (YI value) for Example 7-10 and Reference 1-7 were listed in Table 2.

**Table 2**

| Ratio of additives ³⁾ | acetic acid (wt%) | magnesium dihydrophosphate (wt%)⁴⁾ | potassium dihydrophosphate (wt%)⁴⁾ | YI value |
|---|---|---|---|---|
| Example No. | | | | |
| Example 7 | 0.2 | 0.1 | 0.05 | 24.58 |
| Example 8 | 0.1 | 0.1 | 0.05 | 33.50 |
| Example 9 | 0.1 | 0.05 | 0.05 | 55.63 |
| Example 10 | 0.1 | 0.1 | 0.1 | 32.39 |
| Reference Example 1 | 0.0 | 0.0 | 0.0 | 88.63 |
| Reference Example 2 | 0.3 | 0.0 | 0.0 | 44.43 |
| Reference Example 3 | 0.0 | 0.1 | 0.0 | 60.00 |
| Reference Example 4 | 0.0 | 0.0 | 0.1 | 77.56 |
| Reference Example 5 | 0.1 | 0.2 | 0.0 | 72.12 |
| Reference Example 6 | 0.1 | 0.0 | 0.2 | 48.22 |
| Reference Example 7 | 0.0 | 0.1 | 0.1 | 80.03 |

| | | | | |
|---|---|---|---|---|
| Note 3): The weight percent for each additive is base on the weight of EVOH. 4): The weight of magnesium dihydrophosphate is calculated according to magnesium dihydrophosphate containing four crystallized water which formula is Mg(H₂PO₄)₂*4H₂O; a formula of potassium dihydrophosphate is KH₂PO₄. | | | | |

From Table 2, it knows that in Examples 7 to 10 in which the cycling coagulating fluid was added with additives such as acetic acid and phosphates possess improved heat resistance. In the present invention, the heat resistance is not necessary. The heat resistance requirement depends on the end use. Therefore, if the EVOH intends to use in the field which no heat resistance is required, the addition of additives is not needed. The Reference Examples still fall in the scope of the present invention.

Additional advantages and modifications will be readily made to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. A method for manufacturing ethylene-vinyl alcohol copolymer pellets, which comprises
passing a solution of ethylene-vinyl alcohol copolymer at a temperature of 55°C to 100°C through a die plate of an extruder,
cutting the extruded solution into pellets
by using a cutter having a spin speed of 550 rpm to 6000 rpm whilesimultaneously cooling the ethylene-vinyl alcohol copolymer pellets with a flowing coagulating fluid at a temperature of -20°C to 50°C to cold precipitate the copolymer pellets in the fluid, wherein
the cutting is carried out in the flowing coagulation fluid, and
then charging the pellets-containing fluid into a solid-liquid separating device to separate the ethylene-vinyl alcohol copolymer pellet,
provided that if the cutter has a spin speed of less than 850 rpm, then the distance between the orifices of the die plate is not less than 240 mm
wherein
said ethylene-vinyl alcohol (EVOH) polymer solution contains 30-60 wt% EVOH and a solvent mixture consisting of alcohol and water in a weight ratio of 90/10~70/30.

2. The method according to claim 1, wherein the cutter has a spin speed of 850 rpm to 4500 rpm.

3. The method according to claim 1, wherein the cutter has a spin speed of 1000 rpm to 3000 rpm.

4. The method according to claim 1, wherein the solution of ethylene-vinyl alcohol copolymer is at a temperature of 60°C to 90°C.

5. The method according to claim 1, wherein the solution of ethylene-vinyl alcohol copolymer is at a temperature of 60°C to 85°C.

6. The method according to claim 1, wherein the flowing coagulating fluid is at a temperature of 0°C to 35°C.

7. The method according to claim 1, wherein the flowing coagulating fluid is selected from the group consisting of liquid nitrogen, water, (C1-6) alkyl alcohol or a mixture thereof.

8. The method according to claim 1, wherein when the flow rate of the flowing coagulating fluid is represented by **A** and the flow rate of the solution of ethylene-vinyl alcohol copolymer is represented by **B**, then the ratio **R** of the flow rate **A** of the flowing coagulating fluid to the flow rate **B** of the solution of ethylene-vinyl alcohol copolymer is in the range of from 0.2 to 150.

9. The method according to claim 1, wherein the R (A/B) is in the range of from 0.5 to 100.

10. The method according to claim 9, wherein the R (A/B) is in the range of from 1.0 to 80.

11. The method according to claim 1, wherein the amount of the ethylene-vinyl alcohol copolymer is from 30 to 60% by weight of the solution of ethylene-vinyl alcohol copolymer.

12. The method according to any one of claims 1 to 11, wherein the flowing coagulating fluid for cooling precipitating the copolymer is further added with acetic acid and/or a phosphate salt.

13. The method according to claim 12, wherein the phosphate salt is selected from magnesium dihydrogenphosphate, potassium dihydrogenphosphate, or a mixture thereof.

14. The method according to any one of claims 1 to 13, which further comprises a water-washing step and a pre-drying step after separating the pellets from the fluid, the pre-drying step is carried out in an atmosphere of argon, nitrogen, air, or a mixture thereof at a temperature of from 30°C to 130°C and a relative humidity of from 5% to 100%.

## Patentansprüche

1. Verfahren zur Herstellung von Ethylen-Vinylalkohol-Copolymer-Pellets, das Folgendes umfasst:
Hindurchleiten einer Lösung eines Ethylen-Vinylalkohol-Copolymers bei einer Temperatur von 55 °C bis 100 °C durch eine Düsenplatte eines Extruders,
Schneiden der extrudierten Lösung in Pellets unter Verwendung einer Schneidvorrichtung mit einer Drehzahl von 550 U/min bis 6000 U/min, während gleichzeitig die Ethylen-Vinylalkohol-Copolymer-Pellets mit einem fließenden Koagulierfluid bei einer Temperatur von -20 °C bis 50 °C gekühlt werden, um die Copolymer-Pellets in dem Fluid kalt auszufällen, wobei das Schneiden in dem fließenden Koagulierfluid ausgeführt wird, und
anschließendes Einleiten des Pellets-haltigen Fluids in eine Feststoff-Flüssigkeits-Trennvorrichtung zum Abtrennen des Ethylen-Vinylalkohol-Copolymer-Pellets,
unter dem Vorbehalt, dass, wenn die Schneidvorrichtung eine Drehzahl von weniger als 850 U/min hat, die Distanz zwischen den Öffnungen der Düsenplatte nicht kleiner als 240 mm ist, wobei
die Ethylen-Vinylalkohol (EVOH)-Polymer-Lösung 30-60 Gewichts-% EVOH und ein Lösemittelgemisch aus Alkohol und Wasser in einem Gewichtsverhältnis von 90/10-70/30 enthält.

2. Verfahren nach Anspruch 1, wobei die Schneidvorrichtung eine Drehzahl von 850 U/min bis 4500 U/min hat.

3. Verfahren nach Anspruch 1, wobei die Schneidvorrichtung eine Drehzahl von 1000 U/min bis 3000 U/min hat.

4. Verfahren nach Anspruch 1, wobei die Lösung aus Ethylen-Vinylalkohol-Copolymer eine Temperatur von 60 °C bis 90 °C hat.

5. Verfahren nach Anspruch 1, wobei die Lösung aus Ethylen-Vinylalkohol-Copolymer eine Temperatur von 60 °C bis 85 °C hat.

6. Verfahren nach Anspruch 1, wobei das fließende Koagulierfluid eine Temperatur von 0 °C bis 35 °C hat.

7. Verfahren nach Anspruch 1, wobei das fließende Koagulierfluid aus folgender Gruppe ausgewählt wird: flüssiger Stickstoff, Wasser, (C1-6) Alkylalkohol oder einem Gemisch davon.

8. Verfahren nach Anspruch 1, wobei, wenn die Strömungsrate des fließenden Koagulierfluids durch A dargestellt wird und die Strömungsrate der Lösung aus Ethylen-Vinylalkohol-Copolymer durch B dargestellt wird, das Verhältnis R der Strömungsrate A des fließenden Koagulierfluids zur Strömungsrate B der Lösung aus Ethylen-Vinylalkohol-Copolymer im Bereich von 0,2 bis 150 liegt.

9. Verfahren nach Anspruch 1, wobei das R (A/B) im Bereich von 0,5 bis 100 liegt.

10. Verfahren nach Anspruch 9, wobei das R (A/B) im Bereich von 1,0 bis 80 liegt.

11. Verfahren nach Anspruch 1, wobei die Menge des Ethylen-Vinylalkohol-Copolymers im Bereich von 30 bis 60 Gewichts-% der Lösung aus Ethylen-Vinylalkohol-Copolymer liegt.

12. Verfahren nach einem der Ansprüche 1 bis 11, wobei das fließende Koagulierfluid zum kühlenden Ausfällen des Copolymers des Weiteren mit Essigsäure und/oder einem Phosphatsalz beigegeben wird.

13. Verfahren nach Anspruch 12, wobei das Phosphatsalz aus Magnesium-Diwasserstoffphosphat, Kalium-Diwasserstoffphosphat oder einem Gemisch davon ausgewählt wird.

14. Verfahren nach einem der Ansprüche 1 bis 13, das des Weiteren einen Wasserwasch-Schritt und einen Vortrocknungsschritt nach dem Trennen der Pellets von dem Fluid umfasst, wobei der Vortrocknungsschritt in einer Atmosphäre aus Argon, Stickstoff, Luft oder einem Gemisch davon bei einer Temperatur von 30 °C bis 130 °C und einer relativen Luftfeuchte von 5 % bis 100 % ausgeführt wird.

## Revendications

1. Procédé de fabrication de pastilles de copolymère d'éthylène-alcool vinylique, qui comprend le passage d'une solution de copolymère éthylène-alcool vinylique à une température de 55 à 100 °C à travers une plaque filière d'un extrudeur,
le découpage de la solution extrudée en pastilles en utilisant un outil de coupe ayant une vitesse de rotation de 550 à 6000 tpm,
tout en refroidissant simultanément les pastilles de copolymère éthylène-alcool vinylique avec un fluide de coagulation en écoulement à une température de -20 à 50 °C pour précipiter à froid les pastilles de copolymère dans le fluide, dans lequel
le découpage est réalisé dans le fluide de coagulation en écoulement,
puis le chargement du fluide contenant les pastilles dans un dispositif de séparation solide-liquide pour séparer la pastille de copolymère éthylène-alcool vinylique,
pourvu que si l'outil de coupe a une vitesse de rotation de moins de 850 tpm, alors la distance entre les orifices de la plaque filière est de pas moins de 240 nm,
dans lequel
ladite solution de polymère éthylène-alcool vinylique (EVOH) contient de 30 à 60 % en poids de EVOH et un mélange de solvant constitué d'alcool et d'eau dans un rapport en poids de 90/10 à 70/30.

2. Procédé selon la revendication 1, dans lequel l'outil de coupe a une vitesse de rotation de 850 à 4500 tpm.

3. Procédé selon la revendication 1, dans lequel l'outil de coupe a une vitesse de rotation de 1000 à 3000 tpm.

4. Procédé selon la revendication 1, dans lequel la solution de copolymère éthylène-alcool vinylique est à une température de 60 à 90 °C.

5. Procédé selon la revendication 1, dans lequel la solution de copolymère éthylène-alcool vinylique est à une température de 60 à 85 °C.

6. Procédé selon la revendication 1, dans lequel le fluide de coagulation en écoulement est à une température de 0 à 35 °C.

7. Procédé selon la revendication 1, dans lequel le fluide de coagulation en écoulement est choisi dans le groupe constitué par l'azote liquide, l'eau, un alcool alkylique en C1 à C6 ou un mélange associé.

8. Procédé selon la revendication 1, dans lequel quand le débit du fluide de coagulation en écoulement est représenté par A et le débit de la solution de copolymère éthylène-alcool vinylique est représenté par B, alors le rapport R du débit A du liquide de coagulation en écoulement au débit B de la solution de copolymère éthylène-alcool vinylique se situe dans la plage de 0,2 à 150.

9. Procédé selon la revendication 1, dans lequel le R (A/B) se situe dans la plage de 0;5 à 100.

10. Procédé selon la revendication 1, dans lequel le R (A/B) se situe dans la plage de 1,0 à 80.

11. Procédé selon la revendication 1, dans lequel la quantité du copolymère éthylène-alcool vinylique est de 30 à 60 % en poids de la solution de copolymère éthylène-alcool vinylique.

12. Procédé selon l'une quelconque des revendications 1 à 11, dans lequel le fluide de coagulation en écoulement pour la précipitation à froid du copolymère est en outre ajouté avec de l'acide acétique et/ou un sel de phosphate.

13. Procédé selon la revendication 12, dans lequel le sel de phosphate est choisi parmi le dihydrogénophosphate de magnésium, le dihydrogénophosphate de potassium ou un mélange associé.

14. Procédé selon l'une quelconque des revendications 1 à 13, qui comprend en outre une étape de lavage à l'eau et une étape de pré-séchage après la séparation des pastilles du fluide, l'étape de pré-séchage est réalisée dans une atmosphère d'argon, d'azote, d'air ou d'un mélange associé à une température de 30 à 130 °C et une humidité relative de 5 à 100 %.
